# EUROPEAN PATENT SPECIFICATION

(11) **EP 4 208 315 B1**
(45) Date of publication and mention of the grant of the patent: **05.11.2025**
(21) Application number: 21777845.5
(22) Date of filing: 01.09.2021
(51) Int. Cl.: B25J 9/16

(54) **COMPUTER-IMPLEMENTED METHOD FOR SELF-LEARNING OF AN ANTHROPOMORPHIC ROBOT AND RELATED SELF-LEARNING SYSTEM**
COMPUTERIMPLEMENTIERTES VERFAHREN ZUM SELBSTLERNEN EINES ANTHROPOMORPHEN ROBOTERS UND ZUGEHÖRIGES SELBSTLERNSYSTEM
PROCÉDÉ MIS EN OEUVRE PAR ORDINATEUR POUR L'AUTO-APPRENTISSAGE D'UN ROBOT ANTHROPOMORPHIQUE ET SYSTÈME D'AUTO-APPRENTISSAGE ASSOCIÉ

(30) Priority: 03.09.2020 IT 202000020956
(43) Date of publication of application: 12.07.2023
(73) Proprietor: Sir S.p.A., 41122 Modena (IT)
(72) Inventor: PASSONI, Davide, 41122 Modena (IT)
(74) Representative: Grana, Daniele
(86) International application number: PCT/IB2021/057981
(87) International publication number: WO 2022/049500

(56) References cited:
- WO-A1-2014/093822
- CN-A- 110 561 450
- US-A1- 2012 071 892
- US-A1- 2016 303 737

## Description

### Technical Field

The present invention relates to a computer-implemented method for self-learning of an anthropomorphic robot and related self-learning system.

### Background Art

With reference to robotics for industrial application, programming technologies of anthropomorphic robots are known based on field point learning or offline path programming.

Such technologies, however, involve long programming times and require at least one specialized programmer.

Document US 2016/303737 A1 discloses a dummy tool used to teach a robot the path the robot will follow to perform work on a workpiece to eliminate the possibility of damaging an actual tool during the training.

Document WO 2014/093822 A1 discloses a system for generating instructions for operating a robot to perform work on a workpiece has a 3D model or models of a robot scene that provides robot scene data.

### Description of the Invention

The main aim of the present invention is to devise a computer-implemented method and a self-learning system for an anthropomorphic robot which allow carrying out automatic learning (auto-teach) of complex paths for an anthropomorphic robot, by means of "imitation" of the same movements performed by a human operator.

Another object of the present invention is to devise a computer-implemented method and a self-learning system for an anthropomorphic robot which allow considerably reducing the programming time of an anthropomorphic robot. The aforementioned objects are achieved by the present computer-implemented method for self-learning of an anthropomorphic robot according to the characteristics of claim 1.

The aforementioned objects are achieved by the present self-learning system for an anthropomorphic robot according to the characteristics of claim 6.

### Brief Description of the Drawings

Other characteristics and advantages of the present invention will become more apparent from the description of a preferred, but not exclusive, embodiment of a computer-implemented method and a self-learning system for an anthropomorphic robot, illustrated by way of an indicative, yet non-limiting example, in the accompanying tables of drawings wherein:
Figure 1 is a general diagram of the computer-implemented method according to the invention;
Figure 2 schematically shows the self-learning system according to the invention;
Figure 3 schematically shows the point cloud of detectable by the method and the system according to the invention on the hand of an operator.

The method and system according to the invention envisage to carry out automatic learning (auto-teach) of complex paths for an anthropomorphic robot, by means of "imitation" of the same movements performed by a human operator. In this way, the movements of the machining operations by means of the anthropomorphic robot, in particular the finishing operations, can be easily programmed in an extremely small amount of time.

In particular, with reference to the devised method and system, the operator performs a movement or a trajectory which, after being identified and interpreted by means of appropriate devices and a suitable software, may be easily repeated by an anthropomorphic robot, thus performing a real "teaching" process towards the robot itself.

### Embodiments of the Invention

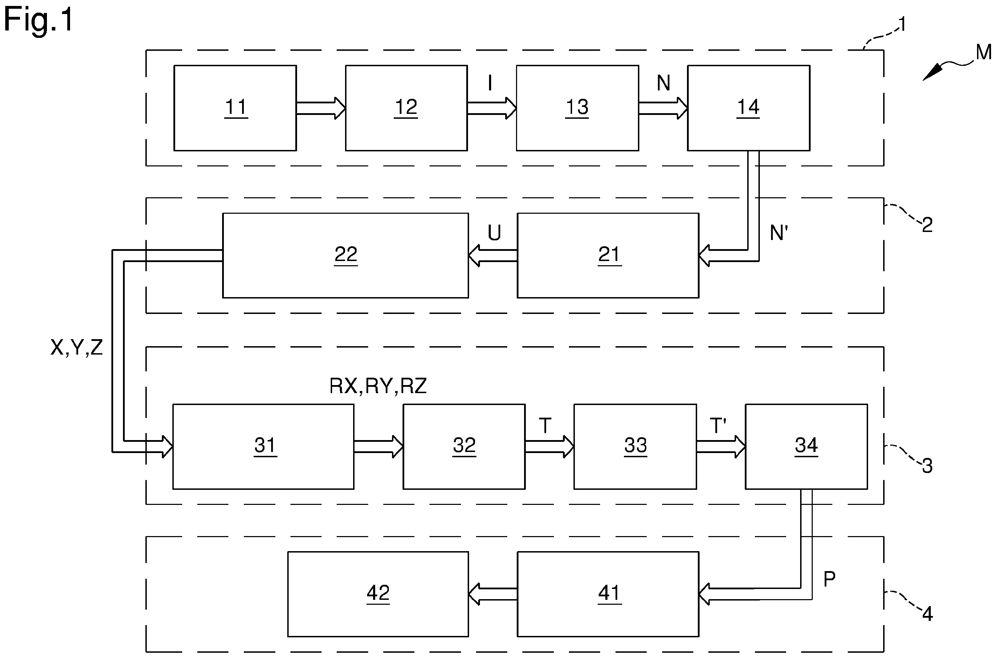

With particular reference to Figure 1, letter M globally denotes a computer-implemented method for self-learning of an anthropomorphic robot.

The method M comprises a first phase 1 of managing at least one three-dimensional vision sensor V and acquired point clouds N.

In particular, the method M comprises a step 12 of acquisition at predefined time intervals and by means of at least one three-dimensional vision sensor V of a sequence of images I relating to a machining operation carried out by an operator O on a reference object R within a learning area.

The reference object R to be machined consists of a physical element (e.g., a mechanical part) that is exactly the same as the object to be machined by the anthropomorphic robot in the industrial application.

Prior to the step 12 of acquisition, the method M comprises at least one calibration step 11 of the three-dimensional vision sensor V with respect to the at least one three-dimensional reference marker.

Furthermore, the method M comprises, for each of the acquired images of the sequence of images I, a step 13 of processing a point cloud N relating to the operator O and to the reference object R within the framed learning area. Preferably, the acquisition step 12 of the image sequence I is carried out by means of a plurality of three-dimensional vision sensors V which are arranged so as to cover the framed learning area by 360 degrees.

In case of using a plurality of three-dimensional vision sensors V, the method M comprises at least one union step 14 of the individual point clouds N obtained from the images I acquired in a specific instant by each of the three-dimensional vision sensors V, to obtain a single reconstructed point cloud N' of the whole framed learning area.

Next, as schematically shown in Figure 1, the method M comprises a phase 2 of managing a tool used by the operator O (or operator tool).

In particular, for each processed point cloud N or for the union point cloud N', in case of use of a plurality of three-dimensional vision sensors V, the computer-implemented method M comprises a step 21 of identifying at least one tool U used by said operator O during said machining operation and of different parts of the body of the operator O.

Furthermore, the method M comprises a step 22 of determining coordinates X, Y, Z of movement axes relating to the tool U and to different parts of the body of the operator O.

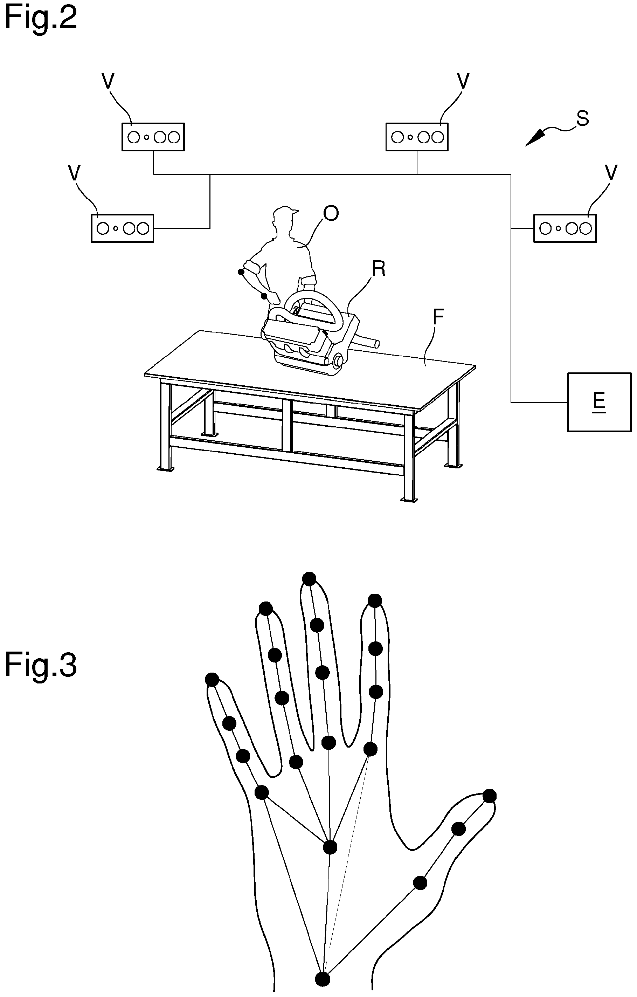

In particular, starting from the succession of reconstructed images I, therefore from the succession of the union point clouds N', the computer-implemented method M is able to recognize, for each of the point clouds, as schematically shown in Figures 2 and 3, the joint of the elbow, the wrist and the knuckles of the fingers, the phalanges and the extremities of the operator's fingers. Preferably, the coordinates X, Y, Z of the movement axes relating to the tool U comprise coordinates relating to the end positions of the index finger and thumb of the hand used by the operator O for the machining operation or coordinates relating to a reference tool held by the operator O during the machining operation.

Still according to a preferred embodiment, the coordinates X, Y, Z of movement axes relating to different parts of the body of the operator O comprise coordinates relating to the knuckles of the index, middle, ring and little finger of the same hand.

In particular, the positions of the joined index finger and thumb, which symbolize the tool U or machining end-effector of the anthropomorphic robot, are very important. The movement of these two fingers in a joint position on the element to be machined, identified by a succession of points X, Y, Z, is substantially the trajectory that the tool or end-effector on board the robot will have to take, meaning by tool U of the robot the extremity position of the end-effector itself (e.g. the milling cutter of a spindle).

The extremity position of the tool U represents in fact the point of contact with the actual workpiece during the machining operation.

Next, as schematically shown in Figure 1, the computer-implemented method M comprises a phase 3 of running a simulation (off-line).

In particular, the method M comprises at least one step 31 of calculating a roto-translation matrix RX, RY, RZ of the tool U in space starting from the coordinates X, Y, Z of movement axes relating to the tool U and to the different parts of the body of the operator O.

In particular, the step 31 of calculating the roto-translation matrix RX, RY, RZ comprises:
- receiving at input the data relating to the sequence of said coordinates X, Y, Z of the tool U, relating to the two joined fingers of the operator O or of the reference tool U, and of the coordinates of the four knuckles of the same operator;
- calculating the average of the coordinates of the four knuckles;
- by knowing the condition of "angle 0" of the operator's hand, calculating the roto-translation matrix between the tool U (two joined fingers or reference tool) and the median position X, Y, Z of the knuckles, thus obtaining the Euler angles RX, RY, RZ of the two joined fingers or of the reference tool in space.

Furthermore, the method M comprises at least one step 32 of calculating the complete trajectory T of the tool U (think e.g. of the milling cutter of a spindle) starting from the succession of coordinates X, Y, Z of the movement axes of the tool U and from the succession of the angles of the roto-translation matrix RY, RY, RZ which identify the spatial inclination of the movement axes of the tool itself.

Therefore, the macro included in the off-line simulation software will automatically draw the trajectory T of the tool U within the simulation. This trajectory T will comprise dimensions and angles and will be positioned on the virtual representation of the element to be machined.

The difference in roto-translation between the human end-effector (the fingers) and the robot end-effector in the virtual environment (the spindle cutter, with its dimensions), will be automatically computed by the simulator by moving the reference triad from the virtual position of the joined fingers to that of the end of the cutter (roto-translation of the tool triad).

As an alternative to the joined fingers, the manual operator could hold, during the auto-teach phase, a dummy tool of the same size as the actual tool U, e.g. of the milling cutter: in this case the X, Y, Z of the extreme point of the tool U will no longer be those of the two joined fingers, but those of the tip of the dummy tool also identified by the sensors or, if this identification is not possible (very small tool), those related to a three-dimensional marker positioned on the dummy tool itself.

Conveniently, the method M comprises at least one step 33 of normalization and correction of the calculated trajectory to obtain a normalized trajectory T'.

In particular, after the drawing of the trajectory T has been superimposed to the virtual piece within the offline simulator, it is possible, through a special function, to normalize portions of trajectory (selectable by sequences of points), reducing them to straight or circular segments, or portions of the inclinations (always selectable by sequences of points), in order to correct any errors due to the unsteady hand of the human operator. The path on the simulator is therefore fully editable, so it is possible to correct dimensions or angles, if these involve areas of collision, singularity, out of area of the robot axes. It is also possible to move the complete trajectory T closer to or further away from the surface of the element to be machined, so that the tool can exert more or less force during machining by contact.

The same corrections may be applied to the rounding data of the trajectory T (passage accuracy at fly-by points) and to the path execution speed data.

The refinement of the trajectory T on the simulator occurs quickly (since the trajectory has already been made) and is assumed to involve only a few corrections. At the end of the process, by means of a run key, it will be possible to preview (simulate) the behavior of the robot in carrying out the normalized trajectory T'.

Next, the method M comprises at least one step 34 of converting the calculated, possibly normalized, trajectory T into a program module P for an anthropomorphic robot provided with at least one tool. Specifically, the program module P comprises a sequence of instructions for the movement of the tool along said trajectory T by an anthropomorphic robot.

Therefore, once the goodness of the trajectory T of the simulator has been checked in the virtual representation, the program module P of the robot (sequence of movement instructions that make up the trajectory) is transferred via Ethernet or other bus to the robot of the actual cell.

As schematically shown in Figure 1, the computer-implemented method M comprises a phase 4 of managing the actual robot within the actual cell.

In particular, the method M comprises a step 41 of executing the trajectory T or the normalized trajectory T' on the actual cell by means of the anthropomorphic robot.

The robot (real world), being properly calibrated with the virtual world and with the auto-teach world and by sharing with such worlds the same reference triads, is consequently able to repeat the trajectory actually (i.e. in the real world), with the same results displayed in the offline simulation.

The computer-implemented method may also comprise a further step 42 of fine correction of the trajectory T or of the normalized trajectory T', for possible corrections aimed to achieve optimal machining quality.

The self-learning system S for anthropomorphic robot is schematically shown in Figure 2 and comprises means for the execution of the computer-implemented method M described above.

The system S comprises a learning station comprising at least one processing unit E and at least one three-dimensional vision sensor V.

The three-dimensional vision sensor V is operationally connected to the processing unit E and is configured to carry out the acquisition step 12, at predefined time intervals, of the sequence of images I during a machining operation carried out by an operator O on the reference object R, within a learning area.

The processing unit E is configured to carry out the processing step 13, for each of the acquired images I of the image sequence, of the point cloud N relating to the operator O and to the reference object R within the framed learning area. Preferably, the three-dimensional vision sensor V employed is a high-speed stereoscopic sensor.

Still according to a preferred embodiment, the learning station comprises a plurality of three-dimensional vision sensors V arranged to cover said framed learning area by 360 degrees.

In this case, the processing unit E is configured to carry out the union step 14 of the single point clouds N obtained from the images I acquired at a given instant by each of the three-dimensional vision sensors V, to obtain a single reconstructed point cloud N' of the whole framed learning area.

Therefore, in the case in which the three-dimensional vision sensors V are more than one, they are connected to each other and to the processing unit E which, after having received the image I from all the sensors, carries out a union operation of the single images I obtained, so as to obtain a single reconstructed point cloud N' of the whole framed field, starting from the single point clouds N of each three-dimensional vision sensor V.

If the three-dimensional vision sensor V is just one, the union point cloud N' generated by the processing unit E corresponds to the point cloud N at the output from the single sensor.

The processing unit E may carry out the computation of the union image N' at runtime if the computational resources permit, or it may be carried out at a later time after storing the single clouds N.

In particular, in order to store the movements of the operator O during the machining operation of the reference object R, successive images *n* acquired for a certain amount of time are required, this time being necessary to complete the machining operation, from each of the three-dimensional vision sensors V, according to a time sampling providing an acquisition every *m* milliseconds. At the end *n* x *x* single point clouds will be obtained coming from each of the vision sensors, where *x* is the number of sensors, and *n* is the total point clouds N', subject of the reconstruction of the whole scene at each time interval (union of the *x* single clouds N at time m, union of the *x* single clouds N at time *2*m,* etc.).

The three-dimensional vision sensors V shall have a common calibration point (triad in space) so that all three-dimensional images can be fitted according to a known reference.

The use of a plurality of three-dimensional vision sensors V may be necessary to avoid undercuts and because some movements may be visible, at certain instants, by one sensor and not by another (or vice versa). However, nothing prohibits simplifying the learning station to only one sensor.

The reference object R to be machined consists of a physical element (e.g. a mechanical part) which is exactly the same as the object to be machined by the robot in the industrial application.

This reference object R must be positioned within the learning station on an attachment tool F equal to the one the robot will use in the actual machining operation.

Conveniently, the processing unit E is configured to carry out the calibration step 11 for calibrating the at least one three-dimensional vision sensor V with respect to the at least one three-dimensional reference marker.

In particular, the system S comprises at least a first three-dimensional reference marker placed within the training station. Preferably, said first marker is associated with at least one attachment tool F of the reference object R within the training station.

This first marker represents the origin of the user coordinates of the workobject (main coordinates of the system).

Such first marker is also common to the real robot and to the simulated representation of the same.

Furthermore, the system S comprises at least a second three-dimensional reference marker associated with the reference object R to be machined.

This second marker represents the origin of the object coordinates of the workobject of the system and will be used to correct any deviations in roto-translation of the position of the real piece with respect to the main triad defined by the first marker (user).

The three-dimensional vision sensors V are calibrated with respect to the coordinates of the first marker (user coordinates of the workobject), which represents the origin of the coordinates and the reference triad of the whole system S.

The processing unit E is also configured to carry out the step 21 of identifying at least one tool U used by the operator O during the machining operation and of the different parts of the operator's body, and the step 22 of determining coordinates X, Y, Z of movement axes relating to the tool U and to the different parts of the operator's body.

The processing unit E of the learning station comprises an offline robotics simulation software of the known type. Such simulation software comprises a virtual CAD representation of an actual machining cell, including the robot (with motion control thereof), the attachment tool, the object to be machined, and the actual tool which will be mounted on board the robot (e.g., a spindle with a milling cutter).

The reference systems (workobject triads) of the virtual representation will be the same as those of the vision sensors and of the cell with the real robot.

In particular, the processing unit E is configured to carry out the step 31 of calculating a roto-translation matrix RX, RY, RZ of the tool U in space starting from the coordinates X, Y, Z of movement axes relating to the tool U and to the different parts of the body of the operator O.

In addition, the processing unit E is configured to carry out the step 32 of calculating the complete trajectory T of the tool U starting from the succession of the coordinates X, Y, Z of the movement axes of the tool U and from the succession of angles of the roto-translation matrix RY, RY, RZ identifying the spatial inclination of the movement axes of the tool itself.

Conveniently, the processing unit E is configured to carry out the step 33 of normalization and correction of the calculated trajectory T.

Furthermore, the processing unit E is configured to carry out the step 34 for converting the calculated trajectory T' into a program module P for an anthropomorphic robot provided with at least one tool, wherein the program module P comprises a sequence of instructions for moving the tool along the trajectory T'.

It has in practice been ascertained that the described invention achieves the intended objects.

In particular, the fact is emphasized that the computer-implemented method and the self-learning system for an anthropomorphic robot according to the invention allow carrying out an automatic learning (auto-teach) of complex paths for an anthropomorphic robot, by "imitation" of the same movements performed by a human operator.

In addition, the computer-implemented method and the self-learning system for an anthropomorphic robot according to the invention make it possible to considerably reduce the programming time of an anthropomorphic robot.

## Claims

1. Computer-implemented method (M) for self-learning of an anthropomorphic robot, comprising at least the following steps:
- acquisition at predefined time intervals and by means of at least one three-dimensional vision sensor (V) of a sequence of images (I) relating to a machining operation carried out by an operator (O) on a reference object (R) within a learning area (step 12);
- processing, for each of the acquired images (I) of said sequence of images, of a point cloud (N) relating to the operator (O) and to the reference object (R) within said framed learning area (step 13);
- for each processed point cloud (N), identification of at least one tool (U) used by said operator (O) during said machining operation and of different parts of the body of said operator (O) (step 21);
**characterized in that** it comprises at least the following steps:
- determination of coordinates (X, Y, Z) of movement axes relating to said tool (U) and to said different parts of the body of the operator (O) (step 22), wherein said coordinates (X, Y, Z) of movement axes relating to said tool (U) comprise coordinates relating to the end positions of the index finger and thumb of the hand used by said operator (O) for the machining operation or coordinates relating to a reference tool (U) held by said operator (O) during the machining operation, and wherein said coordinates (X, Y, Z) of movement axes relating to different parts of the body of said operator (O) comprise coordinates relating to the knuckles of the index, middle, ring and little finger of the same hand;
- calculation of a roto-translation matrix (RX, RY, RZ) of said tool (U) in space starting from said coordinates (X, Y, Z) of movement axes relating to said tool (U) and to said different parts of the body of the operator (O) (step 31), wherein said calculation step of the roto-translation matrix (RX, RY, RZ) comprises: receiving at input the data relating to the sequence of said coordinates (X, Y, Z) of the tool (U) and of said coordinates of the four knuckles of said operator (O); calculating the average of the coordinates of the four knuckles; calculating the roto-translation matrix between the tool (U) and the median position (X, Y, Z) of the knuckles, obtaining the Euler angles (RX, RY, RZ) of the two joined fingers or of the reference tool (U) in space;
- calculation of the complete trajectory (T) of said tool (U) starting from the succession of said coordinates (X, Y, Z) of the movement axes of the tool (U) and from the succession of the angles of said roto-translation matrix (RY, RY, RZ) that identify the spatial inclination of said movement axes of the tool (U);
- conversion of said calculated trajectory (T) into a program module (P) for an anthropomorphic robot provided with at least one tool (U), wherein said program module (P) comprises a sequence of instructions for the movement of said tool (U) along said trajectory (T).

2. Computer-implemented method (M) according to claim 1, **characterized by** the fact that said acquisition step (12) is carried out by means of a plurality of three-dimensional vision sensors (V).

3. Computer-implemented method (M) according to claim 2, **characterized by** the fact that said processing step (13) comprises at least one union step for the union of the individual point clouds (N) obtained from the images (I) acquired in a specific instant by each of said three-dimensional vision sensors (V), to obtain a single union point cloud (N') of all the framed learning area.

4. Computer-implemented method (M) according to one or more of the preceding claims, **characterized by** the fact that it comprises at least one calibration step (11) of said at least one three-dimensional vision sensor (V) with respect to at least one three-dimensional reference marker.

5. Computer-implemented method (M) according to one or more of the preceding claims, **characterized by** the fact that it comprises at least one normalization and correction step (33) of said calculated trajectory (T).

6. Self-learning system (S) for anthropomorphic robot, comprising means for the performance of the computer-implemented method (M) according to one or more of the preceding claims, **characterized by** the fact that it comprises:
- a learning station comprising at least one processing unit (E) and said at least one three-dimensional vision sensor (V), said at least one three-dimensional vision sensor (V) being operationally connected to said processing unit (E) and being configured to carry out said acquisition step (12) of said sequence of images (I);
- wherein said processing unit (E) is configured to carry out said processing step (13) of said point cloud (N), said identification step (21) for identifying at least one tool (U) and of different parts of the body of said operator (O), said determination step (22) for determining the coordinates (X, Y, Z) of the movement axes; said calculation step (31) for calculating a roto-translation matrix (RX, RY, RZ), said calculation step (32) for calculating the complete trajectory (T) of said tool (U), said conversion step (34) for converting said calculated trajectory (T) into a program module (P) for an anthropomorphic robot.

7. System (S) according to the preceding claim 6, **characterized by** the fact that said at least one three-dimensional vision sensor (V) is a high-speed stereoscopic sensor.

8. System (S) according to one or more of claims 6 and 7, **characterized by** the fact that said learning station comprises a plurality of three-dimensional vision sensors (V).

9. System (S) according to claim 8, **characterized by** the fact that said processing unit (E) is configured to carry out said union step (14) of the single point clouds (N) obtained from the images (I) acquired in a given instant by each of said three-dimensional vision sensors (V), to obtain a single reconstructed union point cloud (N') of the whole framed learning area.

10. System (S) according to one or more of claims 6 to 9, **characterized by** the fact that said processing unit (E) is configured to carry out said calibration step (11) for calibrating said at least one three-dimensional vision sensor (V) with respect to at least one three-dimensional reference marker.

11. System (S) according to claim 10, **characterized by** the fact that it comprises at least a first three-dimensional reference marker placed inside said training station.

12. System (S) according to claim 11, **characterized by** the fact that it comprises at least a second three-dimensional reference marker associated with said reference object (R) to be machined.

13. System (S) according to one or more of claims 6 to 12, **characterized by** the fact that said processing unit (E) is configured to carry out said at least one normalization and correction step (33) of said calculated trajectory (T).

## Patentansprüche

1. Computerimplementiertes Verfahren (M) für das Selbstlernen eines anthropomorphen Roboters, das mindestens die folgenden Schritte umfasst:
- Erfassen einer Folge von Bildern (I), die sich auf einen Fertigungsvorgang beziehen, der von einem Bediener (O) an einem Referenzobjekt (R) innerhalb eines Lernbereichs durchgeführt wird, in vordefinierten Zeitintervallen und mittels mindestens eines dreidimensionalen Bildsensors (V) (Schritt 12);
- Verarbeiten einer Punktwolke (N), die sich auf den Bediener (O) und auf das Referenzobjekt (R) innerhalb des umrahmten Lernbereichs bezieht, für jedes der erfassten Bilder (I) der genannten Folge von Bildern (Schritt 13);
- Identifizieren mindestens eines Werkzeuges (U), das von dem Bediener (O) während des Fertigungsvorganges verwendet wird, und verschiedener Körperteile des Bedieners (O) für jede verarbeitete Punktwolke (N) (Schritt 21);
**dadurch gekennzeichnet, dass** es mindestens die folgenden Schritte umfasst:
- Bestimmen von Koordinaten (X, Y, Z) von Bewegungsachsen, die sich auf das Werkzeug (U) und auf die verschiedenen Körperteile des Bedieners (O) beziehen (Schritt 22), wobei die Koordinaten (X, Y, Z) von Bewegungsachsen, die sich auf das Werkzeug (U) beziehen, Koordinaten umfassen, die sich auf die Endpositionen des Zeigefingers und des Daumens der Hand beziehen, die von dem Bediener (O) für den Fertigungsvorgang verwendet wird, oder Koordinaten, die sich auf ein Referenzwerkzeug (U) beziehen, das von dem Bediener (O) während des Fertigungsvorganges gehalten wird, und wobei die Koordinaten (X, Y, Z) von Bewegungsachsen, die sich auf verschiedene Körperteile des Bedieners (O) beziehen, Koordinaten umfassen, die sich auf die Knöchel des Zeige-, Mittel-, Ring- und kleinen Fingers derselben Hand beziehen;
- Berechnen einer Rototranslationsmatrix (RX, RY, RZ) des Werkzeugs (U) im Raum, ausgehend von den Koordinaten (X, Y, Z) der Bewegungsachsen, die sich auf das Werkzeug (U) und auf die verschiedenen Körperteile des Bedieners (O) beziehen (Schritt 31), wobei der Schritt der Berechnung der Rototranslationsmatrix (RX, RY, RZ) umfasst: Empfangen von Daten am Eingang, die sich auf die Folge der Koordinaten (X, Y, Z) des Werkzeugs (U) und der Koordinaten der vier Fingerknöchel des Bedieners (O) beziehen; Berechnen des Mittelwerts der Koordinaten der vier Fingerknöchel; Berechnen der Rototranslationsmatrix zwischen dem Werkzeug (U) und der mittleren Position (X, Y, Z) der Fingerknöchel, Ermitteln der Euler-Winkel (RX, RY, RZ) der beiden verbundenen Finger oder des Referenzwerkzeugs (U) im Raum;
- Berechnen der vollständigen Trajektorie (T) des besagten Werkzeugs (U) ausgehend von der Abfolge der besagten Koordinaten (X, Y, Z) der Bewegungsachsen des Werkzeugs (U) und von der Abfolge der Winkel der besagten Rototranslationsmatrix (RY, RY, RZ), die die räumliche Neigung der besagten Bewegungsachsen des Werkzeugs (U) identifizieren;
- Umwandeln der berechneten Trajektorie (T) in ein Programmmodul (P) für einen anthropomorphen Roboter, der mit mindestens einem Werkzeug (U) ausgestattet ist, wobei das Programmmodul (P) eine Folge von Anweisungen für die Bewegung des Werkzeugs (U) entlang der Trajektorie (T) umfasst.

2. Computerimplementiertes Verfahren (M) nach Anspruch 1, **dadurch gekennzeichnet, dass** der Schritt des Erfassens (12) mittels einer Mehrzahl von dreidimensionalen Bildsensoren (V) durchgeführt wird.

3. Computerimplementiertes Verfahren (M) nach Anspruch 2, **dadurch gekennzeichnet, dass** der Schritt des Verarbeitens (13) mindestens einen Vereinigungsschritt für die Vereinigung der einzelnen Punktwolken (N) umfasst, die aus den zu einem bestimmten Zeitpunkt von jedem der dreidimensionalen Bildsensoren (V) erfassten Bildern (I) erhalten werden, um eine einzige vereinigte Punktwolke (N') des gesamten umrahmten Lernbereichs zu erhalten.

4. Computerimplementiertes Verfahren (M) nach einem oder mehreren der vorhergehenden Ansprüche, **dadurch gekennzeichnet, dass** es mindestens einen Schritt (11) des Kalibrierens des mindestens einen dreidimensionalen Bildsensors (V) in Bezug auf mindestens einen dreidimensionalen Referenzmarker umfasst.

5. Computerimplementiertes Verfahren (M) nach einem oder mehreren der vorhergehenden Ansprüche, **dadurch gekennzeichnet, dass** es mindestens einen Schritt des Normalisierens und Korrigierens (33) der berechneten Trajektorie (T) umfasst.

6. Selbstlernendes System (S) für einen anthropomorphen Roboter, umfassend Mittel zur Durchführung des computerimplementierten Verfahrens (M) nach einem oder mehreren der vorhergehenden Ansprüche, **dadurch gekennzeichnet, dass** es umfasst
- eine Lernstation, die mindestens eine Verarbeitungseinheit (E) und den mindestens einen dreidimensionalen Bildsensor (V) umfasst, wobei der mindestens eine dreidimensionale Bildsensor (V) mit der Verarbeitungseinheit (E) in Wirkverbindung steht und dazu ausgebildet ist, den Schritt des Erfassens (12) der Folge von Bildern (I) auszuführen;
- wobei die Verarbeitungseinheit (E) dazu ausgebildet ist, den Schritt des Verarbeitens (13) der Punktwolke (N), den Schritt des Identifizierens (21) zum Identifizieren von mindestens einem Werkzeug (U) und von verschiedenen Körperteilen des Bedieners (O), den Schritt des Bestimmens (22) zum Bestimmen der Koordinaten (X, Y, Z) der Bewegungsachsen auszuführen; den Schritt des Berechnens (31) zum Berechnen einer Rototranslationsmatrix (RX, RY, RZ), den Schritt des Berechnens (32) zum Berechnen der vollständigen Trajektorie (T) des Werkzeugs (U), den Schritt des Umwandelns (34) zum Umwandeln der berechneten Trajektorie (T) in ein Programmmodul (P) für einen anthropomorphen Roboter.

7. System (S) nach dem vorhergehenden Anspruch 6, **dadurch gekennzeichnet, dass** der mindestens eine dreidimensionale Bildsensor (V) ein stereoskopischer Hochgeschwindigkeitssensor ist.

8. System (S) nach einem oder mehreren der Ansprüche 6 und 7, **dadurch gekennzeichnet, dass** die Lernstation eine Vielzahl von dreidimensionalen Bildsensoren (V) umfasst.

9. System (S) nach Anspruch 8, **dadurch gekennzeichnet, dass** die Verarbeitungseinheit (E) dazu ausgebildet ist, den Vereinigungsschritt (14) der einzelnen Punktwolken (N) auszuführen, die aus den zu einem gegebenen Zeitpunkt von jedem der dreidimensionalen Bildsensoren (V) erfassten Bildern (I) erhalten wurden, um eine einzige rekonstruierte vereinigte Punktwolke (N') des gesamten umrahmten Lernbereichs zu erhalten.

10. System (S) nach einem oder mehreren der Ansprüche 6 bis 9, **dadurch gekennzeichnet, dass** die Verarbeitungseinheit (E) dazu ausgebildet ist, den Schritt des Kalibrierens (11) zum Kalibrieren des mindestens einen dreidimensionalen Bildsensors (V) in Bezug auf mindestens einen dreidimensionalen Referenzmarker auszuführen.

11. System (S) nach Anspruch 10, **dadurch gekennzeichnet, dass** es mindestens einen ersten dreidimensionalen Referenzmarker umfasst, der im Inneren der Trainingsstation angeordnet ist.

12. System (S) nach Anspruch 11, **dadurch gekennzeichnet, dass** es mindestens einen zweiten dreidimensionalen Referenzmarker umfasst, der dem zu bearbeitenden Referenzobjekt (R) zugeordnet ist.

13. System (S) nach einem oder mehreren der Ansprüche 6 bis 12, **dadurch gekennzeichnet, dass** die Verarbeitungseinheit (E) dazu ausgebildet ist, den mindestens einen Schritt des Normalisierens und Korrigierens (33) der berechneten Trajektorie (T) auszuführen.

## Revendications

1. - Procédé mis en œuvre par ordinateur (M) pour l'auto-apprentissage d'un robot anthropomorphique, comprenant au moins les étapes suivantes :
- acquisition à des intervalles de temps prédéfinis et au moyen d'au moins un capteur de vision en trois dimensions (V) d'une séquence d'images (I) se rapportant à une opération d'usinage effectuée par un opérateur (O) sur un objet de référence (R) à l'intérieur d'une zone d'apprentissage (étape 12) ;
- traitement, pour chacune des images acquises (I) de ladite séquence d'images, d'un nuage de points (N) se rapportant à l'opérateur (O) et à l'objet de référence (R) à l'intérieur de ladite zone d'apprentissage encadrée (étape 13) ;
- pour chaque nuage de points traité (N), identification d'au moins un outil (U) utilisé par ledit opérateur (O) pendant ladite opération d'usinage et de différentes parties du corps dudit opérateur (O) (étape 21) ;
**caractérisé par le fait qu'**il comprend au moins les étapes suivantes :
- détermination de coordonnées (X, Y, Z) d'axes de déplacement se rapportant audit outil (U) et auxdites différentes parties du corps de l'opérateur (O) (étape 22), lesdites coordonnées (X, Y, Z) d'axes de déplacement se rapportant audit outil (U) comprenant des coordonnées se rapportant aux positions extrêmes de l'index et du pouce de la main utilisée par ledit opérateur (O) pour l'opération d'usinage ou des coordonnées se rapportant à un outil de référence (U) tenu par ledit opérateur (O) pendant l'opération d'usinage, et lesdites coordonnées (X, Y, Z) d'axes de déplacement se rapportant à différentes parties du corps dudit opérateur (O) comprenant des coordonnées se rapportant aux jointures de l'index, du majeur, de l'annulaire et de l'auriculaire de la même main ;
- calcul d'une matrice de roto-translation (RX, RY, RZ) dudit outil (U) dans l'espace à partir desdites coordonnées (X, Y, Z) d'axes de déplacement se rapportant audit outil (U) et auxdites différentes parties du corps de l'opérateur (O) (étape 31), ladite étape de calcul de la matrice de roto-translation (RX, RY, RZ) comprenant : recevoir à l'entrée les données se rapportant à la séquence desdites coordonnées (X, Y, Z) de l'outil (U) et desdites coordonnées des quatre jointures dudit opérateur (O) ; calculer la moyenne des coordonnées des quatre jointures ; calculer la matrice de roto-translation entre l'outil (U) et la position médiane (X, Y, Z) des jointures, obtenir les angles d'Euler (RX, RY, RZ) des deux doigts joints ou de l'outil de référence (U) dans l'espace ;
- calcul de la trajectoire complète (T) dudit outil (U) en partant de la succession desdites coordonnées (X, Y, Z) des axes de déplacement de l'outil (U) et de la succession des angles de ladite matrice de roto-translation (RY, RY, RZ) qui identifient l'inclinaison spatiale desdits axes de déplacement de l'outil (U) ;
- conversion de ladite trajectoire calculée (T) en un module de programme (P) pour un robot anthropomorphique comportant au moins un outil (U), ledit module de programme (P) comprenant une séquence d'instructions pour le déplacement dudit outil (U) le long de ladite trajectoire (T).

2. - Procédé mis en œuvre par ordinateur (M) selon la revendication 1, **caractérisé par le fait que** ladite étape d'acquisition (12) est effectuée au moyen d'une pluralité de capteurs de vision en trois dimensions (V).

3. - Procédé mis en œuvre par ordinateur (M) selon la revendication 2, **caractérisé par le fait que** ladite étape de traitement (13) comprend au moins une étape d'union pour l'union des nuages de points individuels (N) obtenus à partir des images (I) acquises à un instant spécifique par chacun desdits capteurs de vision en trois dimensions (V), pour obtenir un nuage de points d'union unique (N') de la totalité de la zone d'apprentissage encadrée.

4. - Procédé mis en œuvre par ordinateur (M) selon une ou plusieurs des revendications précédentes, **caractérisé par le fait qu'**il comprend au moins une étape d'étalonnage (11) dudit au moins un capteur de vision en trois dimensions (V) par rapport à au moins un marqueur de référence tridimensionnel.

5. - Procédé mis en œuvre par ordinateur (M) selon une ou plusieurs des revendications précédentes, **caractérisé par le fait qu'**il comprend au moins une étape de normalisation et de correction (33) de ladite trajectoire calculée (T).

6. - Système d'auto-apprentissage (S) pour robot anthropomorphique, comprenant des moyens pour la réalisation du procédé mis en œuvre par ordinateur (M) selon une ou plusieurs des revendications précédentes, **caractérisé par le fait qu'**il comprend :
- une station d'apprentissage comprenant au moins une unité de traitement (E) et ledit au moins un capteur de vision en trois dimensions (V), ledit au moins un capteur de vision en trois dimension (V) étant connecté de manière fonctionnelle à ladite unité de traitement (E) et étant configuré pour effectuer ladite étape d'acquisition (12) de ladite séquence d'images (I) ;
- ladite unité de traitement (E) étant configurée pour effectuer ladite étape de traitement (13) dudit nuage de points (N), ladite étape d'identification (21) pour identifier au moins un outil (U) et différentes parties du corps dudit opérateur (O), ladite étape de détermination (22) pour déterminer les coordonnées (X, Y, Z) des axes de déplacement ; ladite étape de calcul (31) pour calculer une matrice de roto-translation (RX, RY, RZ), ladite étape de calcul (32) pour calculer la trajectoire complète (T) dudit outil (U), ladite étape de conversion (34) pour convertir ladite trajectoire calculée (T) en un module de programme (P) pour un robot anthropomorphe.

7. - Système (S) selon la revendication précédente 6, **caractérisé par le fait que** ledit au moins un capteur de vision en trois dimensions (V) est un capteur stéréoscopique à grande vitesse.

8. - Système (S) selon une ou plusieurs des revendications 6 et 7, **caractérisé par le fait que** ladite station d'apprentissage comprend une pluralité de capteurs de vision en trois dimensions (V).

9. - Système (S) selon la revendication 8, **caractérisé par le fait que** ladite unité de traitement (E) est configurée pour effectuer ladite étape d'union (14) des nuages de points individuels (N) obtenus à partir des images (I) acquises à un instant donné par chacun desdits capteurs de vision en trois dimensions (V), pour obtenir un nuage de points d'union reconstruit unique (N') de la totalité de la zone d'apprentissage encadrée.

10. - Système (S) selon une ou plusieurs des revendications 6 à 9, **caractérisé par le fait que** ladite unité de traitement (E) est configurée pour effectuer ladite étape d'étalonnage (11) pour étalonner ledit au moins un capteur de vision en trois dimensions (V) par rapport à au moins un marqueur de référence tridimensionnel.

11. - Système (S) selon la revendication 10, **caractérisé par le fait qu'**il comprend au moins un premier marqueur de référence tridimensionnel placé à l'intérieur de ladite station d'apprentissage.

12. - Système (S) selon la revendication 11, **caractérisé par le fait qu'**il comprend au moins un second marqueur de référence tridimensionnel associé audit objet de référence (R) à usiner.

13. - Système (S) selon une ou plusieurs des revendications 6 à 12, **caractérisé par le fait que** ladite unité de traitement (E) est configurée pour effectuer ladite au moins une étape de normalisation et de correction (33) de ladite trajectoire calculée (T).
